# EUROPÄISCHE PATENTSCHRIFT

(11) **EP 0 478 640 B1**
(45) Veröffentlichungstag und Bekanntmachung des Hinweises auf die Patenterteilung: **18.01.1995**
(21) Anmeldenummer: 90909658.8
(22) Anmeldetag: 15.06.1990
(51) Int. Cl.: H04N 9/64

(54) **FERNSEHGERÄT ZUR WAHLWEISEN VERARBEITUNG EINES FBAS- ODER IN BAS UND F GETRENNTEN SIGNALS**
TELEVISION SET FOR SELECTIVELY PROCESSING A COMPOSITE COLOUR VIDEO SIGNAL (CSCC)OR A SIGNAL SPLIT INTO A COMPOSITE VIDEO SIGNAL AND A CHROMINANCE CARRIER
TELEVISEUR PERMETTANT DE TRAITER SELECTIVEMENT UN SIGNAL COMPOSE VIDEO DE COULEUR OU BIEN UN SIGNAL FRACTIONNE EN SIGNAL COMPOSE VIDEO ET EN SIGNAL DE CHROMINANCE

(30) Priorität: 23.06.1989 DE 3920590
(43) Veröffentlichungstag der Anmeldung: 08.04.1992
(73) Patentinhaber: DEUTSCHE THOMSON-BRANDT GMBH, 78048 Villingen-Schwenningen (DE)
(72) Erfinder: LAMY, Christophe, D-7730 Villingen (DE)
(74) Vertreter: Einsel, Robert, Dipl.-Ing.
(86) Internationale Anmeldenummer: EP9000942
(87) Internationale Veröffentlichungsnummer: WO9100675

(56) Entgegenhaltungen:
- EP-A- 0 309 891
- US-A- 4 660 073
- IEEE 1988 International Conference on Consumer Electronics, Digest of Technical Papers, 8-10, June 1988, Rosemont, Illinois; IEEE, (US), T. KURITA et al: "A practical IDTV system improving picture quality for nonstandard TV signals", pages 68-69
- PATENT ABSTRACTS OF JAPAN, vol. 6, No. 107 (E-113)(985), 17 June 1982 & JP, A, 5738091 (SONY K.KL.) 2 March 1983
- IEEE TRANSACTIONS ON CONSUMER ELECTRONICS, vol. 34, No. 3, August 1988, IEEE, (New York, US) Y. Nagaoka et al: "High performance VTR based on the S-VHS format" pages 560-564

## Beschreibung

Die Erfindung geht aus von einem Fernsehgerät gemäß dem Oberbegriff des Anspruchs 1.

An die SCART-Buchse eines Fernsehempfängers kann ein Videosignalgeber für ein FBAS-Signal angeschlossen werden, z.B. ein Videorecorder, eine Kamera oder ein Zeichengenerator. Das FBAS-Signal eines derartigen Gebers steht derzeit an Pin Nr. 20 der SCART-Buchse. Es gibt andererseits auch Videosignalgeber, die an getrennten Ausgängen einerseits das BAS-Signal und andererseits den modulierten Farbträger F liefern. Diese bei Super-VHS (S-VHS) angewendete Signalübertragung hat den Vorteil, daß kein Übersprechen zwischen dem Leuchtdichtesignal und dem Farbträger auftritt und die Farbträgerfalle im Weg des Leuchtdichtesignals nicht erforderlich ist. Bei einem derartigen Signal wird das BAS-Signal ohne den Farbträger dem Pin 20 und der modulierte Farbträger dem Pin 15 der SCART-Buchse zugeführt.

Die beiden genannten Signalarten erfordern unterschiedliche Verarbeitung im Gerät. Es ist daher bekannt, am Gerät einen manuell betätigten Umschalter vorzusehen, mit dem die entsprechende Umschaltung, z.B. zwischen VHS und S-VHS, möglich ist. Diese Umschaltung erfordert somit eine zusätzlich Manipulation. Außerdem besteht die Gefahr, daß bei Vorliegen eines S-VHS-Signals eine Schwarz/Weiß-Wiedergabe erfolgt, obwohl an sich ein Farbfernsehsignal vorliegt.

Es ist auch eine Schaltung bekannt (EP-A2- 0 309 891), bei der ein Umschalter den Eingang des Farbdecoders in seiner Ruhestellung über ein Farbträgerfilter mit dem Pin 20 und in einer zweiten Stellung mit dem Pin 15 verbindet. Eine im Farbdecoder erzeugte, die Anwesenheit eines Farbträgers anzeigende Schaltspannung steuert bei vorhandenem Farbträger an Pin 20 den Umschalter in seine Ruhestellung und bei fehlendem Farbträger an Pin 20 in die zweite Stellung. Dadurch wird erreicht, daß bei vorhandenem Farbträger an Pin 20, also Vorliegen eines FBAS-Signals, nur dieses Signal ausgewertet wird und bei fehlendem Farbträger in Pin 20 der Farbkanal auf den Pin 15 geschaltet wird. Letzteres ist notwendig, weil dann das Leuchtdichtesignal Y an Pin 20 und der Farbträger an Pin 15 getrennt vorliegen.

Wenn an Pin 20 ein FBAS-Signal ohne Farbträger anliegt, z.B. bei einer Schwarz/Weiß-Sendung würde diese Schaltung den Farbkanal auf Pin 15 umschalten und damit den Betrieb für ein in BAS und F getrenntes Signal einschalten, obwohl ein derartiges Signal gar nicht vorliegt. Das ist unverwünscht, weil in diesem Fall zur Vermeidung von Störungen der Betrieb für FBAS-Signal beibehalten werden sollte.

Der Erfindung liegt die Aufgabe zugrunde, die zuletzt beschriebene Schaltung so weiterzubilden, daß bei einem FBAS-Signal ohne Farbträger selbsttätig der Betrieb für FBAS-Signal eingeschaltet bleibt.

Diese Aufgabe wird durch die im Anspruch 1 angegebene Erfindung gelöst. Vorteilhafte Weiterbildungen der Erfindung sind in den Unteransprüchen angegeben.

Bei der Erfindung erfolgt also durch logische Auswertung eindeutig erkennbarer Kriterien in den beiden verschiedenen Signalen ein Testvorgang, als dessen Ergebnis automatisch die manuelle Einschaltung der jeweils optimalen Betriebsart erfolgt. Die manuelle Betätigung eines Schalters ist nicht mehr erforderlich. Es wird auch ausgeschlossen, daß das Gerät in einer für das jeweilige Signal nicht optimalen Betriebsart arbeitet und z.B. bei S-VHS eine Schwarz/Weiß-Wiedergabe bewirkt, obwohl ein Signal mit farbigem Bildinhalt vorliegt. Der schaltungstechnische Aufwand ist gering, weil weitestgehend bereits vorhandene Schaltungsmittel ausgenutzt werden.

Die Erfindung ist grundsätzlich anwendbar bei Fernsehgeräten, denen die genannten unterschiedlichen Signale angeboten werden, insbesondere bei Fernsehempfängern, Monitoren, Videorecordern und sonstigen Studioschaltungen. Die Erfindung ist für alle Farbfernsehsysteme anwendbar, wie z.B. PAL, NTSC und SECAM, ebenso bei Geräten mit einem Multistandard-Chroma-Decoder.

Die Erfindung wird im folgenden am Beispiel eines Fernsehempfängers beschrieben, dem an der SCART-Buchse wahlweise ein FBAS-Signal von einem VHS-Videorecorder oder ein in BAS und F getrenntes Signal von einem S-VHS-Videorecorder zugeführt werden. In der Zeichnung zeigen
- Fig. 1: ein Blockschaltbild für den erfindungsgemäß ausgebildeten Fernsehempfänger und
- Fig. 2: ein Diagramm zur Erläuterung des Testvorganges.

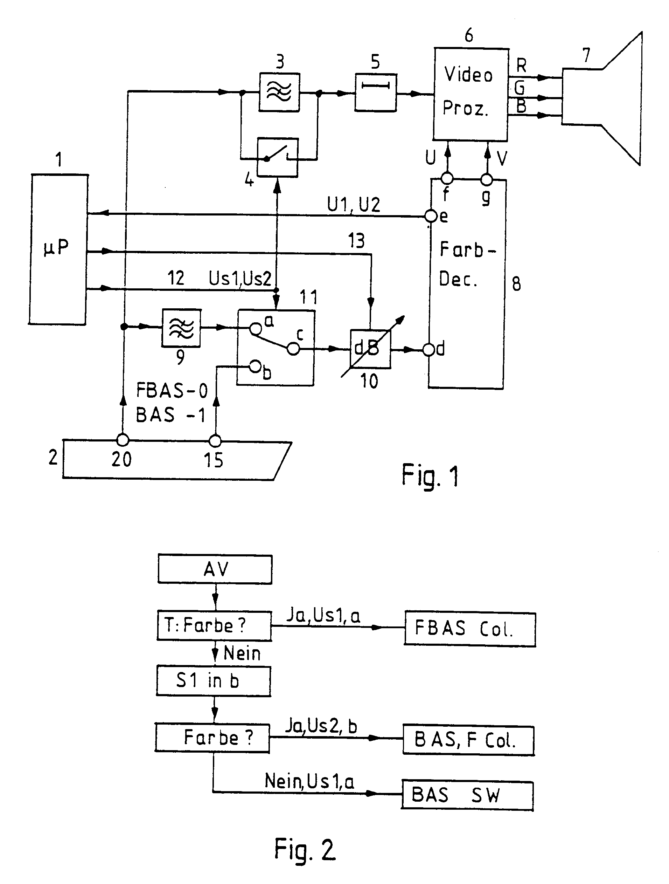

Fig. 1 zeigt einen Auszug aus der Schaltung eines Fernsehempfängers mit dem Mikroprozessor 1, der SCART-Buchse 2, der Farbträgerfalle 3, dem die Farbträgerfalle 3 überbrückenden Schalter 4, der zum Laufzeitausgleich dienenden Verzögerungsstufe 5, dem Videoprozessor 6, der Bildröhre 7, dem Farbdecoder 8, dem auf die Frequenz des Farbträgers abgestimmten Bandfilter 9, dem Umschalter 11 und dem steuerbaren Dämpfungsglied 10.

An die SCART-Buchse 2 können unterschiedliche Farbfernsehsignale von einem Videosignalgeber angelegt werden. Ein FBAS-Signal gelangt an Pin 20 der Buchse 2. Bei Anschluß eines S-VHS-Videorecorders, der die Signale BAS einerseits und den Farbträger F oder die Farbsignale andererseits an getrennten Leitungen liefert, gelangt das BAS-Signal an Pin 20 und der modulierte Farbträger F an Pin 15. Im folgenden wird beschrieben, wie die in Fig. 1 dargestellte Schaltung diese unterschiedlichen Signale an Pin 20 oder an Pin 20 und 15 erkennen und die entsprechenden Umschaltungen vornehmen kann.

In der Ruhestellung ist der Schalter 4 geöffnet, und der Umschalter 11 befindet sich in der Stellung a. Wenn am Pin 20 ein Farbträger vorliegt, gelangt dieser über das Bandfilter 9, den Umschalter 11 und das Dämpfungsglied 10 auf den Eingang d des Farbdecoders 8. In dem Farbdecoder 8 wird durch Auswertung des Farbsynchronsignals in der ohnehin vorhandenen Schaltung zur automatischen Sperrung des Farbkanals (color killer) an Ausgang e eine Spannung U1 oder U2 erzeugt, die die Anwesenheit oder Abwesenheit des Farbsynchronsignals und damit auch des modulierten Farbträgers anzeigt. Wenn in dem Farbdecoder 8 die Anwesenheit des Farbträgers festgestellt wird, entsteht am Ausgang e die Spannung U1, die auf einen Eingang des Prozessors 1 gelangt. Da am Pin 20 nunmehr die Anwesenheit eines Farbträgers festgestellt ist und dieser nur durch ein angelegtes FBAS-Signal bedingt sein kann, werden die beiden Schalter 4, 11 von dem Prozessor 1 über die Leitung 12 mit der Schaltspannung Us1 in den dargestellten Ruhestellungen gehalten. Das am Pin 20 stehende FBAS-Signal wird also in üblicher Weise verarbeitet. Das Leuchtdichtesignal BAS gelangt über die Farbträgerfalle 3 und die Verzögerungsstufe 5 auf den Videoprozessor 6. Der Farbträger F gelangt über das Bandfilter 9, den Schalter 11 und das Dämpfungsglied 10 auf den Eingang d des Farbdecoders 8, der an seinen Ausgängen f, g die Farbdifferenzsignale U, V erzeugt. Der Prozessor 6 erzeugt die drei Farbsignale R, G, B für die Bildröhre 7.

Wenn bei der dargestellten Stellung der Schalter 4 und 11 im Farbdecoder 8 kein Farbsynchronsignal und somit kein Farbträger registriert wird, besteht zunächst eine Unsicherheit. Es ist nämlich möglich, daß am Pin 20 ein Schwarz/Weiß-Signal ohne Farbträger anliegt oder daß es sich um ein S-VHS-Signal handelt, bei dem der Farbträger F getrennt von BAS am Pin 15 liegt. Es wird jetzt die die Abwesenheit des Farbträgers anzeigende Spannung U2 erzeugt. Der Prozessor 1 erzeugt dadurch die Schaltspannung Us2, die über die Leitung 12 den Umschalter 11 in die Stellung b steuert, so daß jetzt der Pin 15 an den Eingang d des Farbdecoders 8 angeschlossen ist. Der Farbdecoder 8 ermittelt jetzt erneut, ob ein Farbträger vorliegt. Wenn die Anwesenheit eines Farbträgers festgestellt wird, so bedeutet das, daß an Pin 15 ein Farbträger F liegt. Der Prozessor liefert jetzt die Schaltspannung Us2, die den Umschalter 11 in der Stellung b hält, um den Farbträger an Pin 15 auszuwerten. Gleichzeitig wird durch Us2 der Schalter 4 geschlossen und damit die Farbträgerfalle 3 überbrückt. Dieses ist sinnvoll, weil nunmehr in dem BAS-Signal am Pin 20 kein Farbträger F mehr vorhanden ist und damit auch eine Unterdrückung des entsprechenden Frequenzbereiches mit der Farbträgerfalle 3 nur nachteilig wäre.

Wenn jedoch in der Stellung b des Umschalters 11 in dem Farbdecoder 8 kein Farbträger ermittelt wird, so bedeutet dies, daß am Pin 15 kein Farbsynchronsignal und kein Farbträger vorhanden ist, also kein S-VHS-Signal vorliegt. Dabei wird angenommen, daß das S-VHS-Signal auch bei einem Schwarz/Weiß-Bild immer das Farbsynchronsignal enthält. Da zu Beginn der Testphase im Signal am Pin 20 auch kein Farbträger ermittelt wurde, muß es sich um ein BAS-Signal am Pin 20 ohne Farbträger F, also um ein Schwarz/Weiß-Signal handeln. Daher erzeugt der Prozessor 1 wiederum die Schaltspannung Us1, die den Umschalter 11 wieder in die Ruhestellung a zurückschaltet. Der Schalter 4 kann in diesem Falle geschlossen bleiben, weil das BAS-Signal am Pin 20 ein Schwarz/Weiß-Signal ist und keinen Farbträger enthält.

Die Schaltung bewirkt also stets eine selbsttätige Anpassung an die drei denkbaren Möglichkeiten, nämlich
1. FBAS-Signal am Pin 20 mit Farbinhalt
2. BAS-Signal am Pin 20 und
   Farbträger F am Pin 15, z.B. von einen S-VHS-Recorder
3. FBAS-Signal am Pin 20 ohne Farbträger, also ein reines Schwarz/Weiß-Signal.

Das Dämpfungsglied 10 zwischen dem Ausgang c des Umschalters 11 und dem Eingang d des Farbdecoders 8 hat folgenden Zweck: Das Signal am Pin 20 hat unvermeidbar stets Trägerreste im Frequenzbereich des Farbträgers, die somit an den Eingang d des Farbdecoders 8 gelangen und zu Fehlauslösungen führen können. Es ist daher zweckmäßig, während des beschriebenen Testvorganges gemäß Fig. 2 das dem Eingang d zugeführte Signal um etwa 10 dB zu dämpfen. Deshalb wird jeweils während des Testvorganges T gemäß Fig. 2 von dem Prozessor 1 über die Leitung 13 das Dämpfungsglied 10 mit einer Dämpfung von 10 dB eingeschaltet. Während des stationären Betriebes in einer der drei beschriebenen Betriebsarten ist das Dämpfungsglied 10 ausgeschaltet.

Es ist vorteilhaft, den gemäß Fig. 2 in einem Testvorgang T ermittelten Zustand der drei möglichen Zustände in dem Prozessor 1 zu speichern. Dann ist z.B. nach einem Ausschalten und Wiedereinschalten des Empfängers der einzustellende Zustand bereits bekannt und braucht nicht ermittelt zu werden. Ein erneuter Testvorgang erfolgt jeweils dann, wenn erneut die AV-Taste betätigt wird oder Pin 8 der SCART-Buchse 2 einen erneuten Wiedergabevorgang signalisiert.

## Patentansprüche

1. Fernsehgerät zur wahlweisen Verarbeitung eines FBAS- oder in BAS und F getrennten Signals mit einem ersten Eingang (20) für das FBAS-Signal oder das BAS-Signal, einem zweiten Eingang (15) für den getrennten Farbträger (F) einem Farbdecoder (8) und einem Umschalter (11), der den Eingang (d) des Farbdecoders (8) in seiner Ruhestellung (a) über ein Farbträgerfilter (9) mit dem ersten Eingang (20) und in einer zweiten Stellung (b) mit dem zweiten Eingang (15) verbindet, wobei eine im Farbdecoder (8) erzeugte, die Anwesenheit des Farbträgers (F) anzeigende Schaltspannung (Us1) bei vorhandenem Farbträger (F) den Umschalter (11) in die Ruhestellung (a) und bei fehlendem Farbträger (F) in die zweite Stellung (b) steuert, **dadurch gekennzeichnet**, daß dann, wenn in der zweiten Stellung (b) die Schaltspannung einen nicht vorhandenen Farbträger (F) anzeigt, die Schaltspannung (Us1) den Umschalter (11) in die Ruhestellung (a) zurück steuert.

2. Gerät nach Anspruch 1, **dadurch gekennzeichnet**, daß die Schaltspannung im Farbdecoder (8) von der Schaltung zur selbsttätigen Sperrung des Farbkanals (color killer) abgeleitet ist.

3. Gerät nach Anspruch 1, **dadurch gekennzeichnet**, daß der erste Eingang (20) über eine Farbträgerfalle (3) mit dem Videoprozessor (6) verbunden ist.

4. Gerät nach Anspruch 3, **dadurch gekennzeichnet**, daß bei Stellung des Umschalters (11) in der zweiten Stellung (b) die Farbträgerfalle (3) unwirksam gesteuert ist.

5. Gerät nach Anspruch 1, **dadurch gekennzeichnet**, daß zwischen dem Ausgang (c) des Umschalters (11) und dem Eingang (d) des Farbdecoders (8) ein Dämpfungsglied (10) liegt, dessen Dämpfung während des Testvorganges auf einen um etwa 10 dB größeren Wert umgeschaltet ist.

6. Gerät nach Anspruch 4 und 5, **dadurch gekennzeichnet**, daß die vom Farbdecoder (8) erzeugte Spannung (U1, U2) an einen Mikroprozessor (1) angelegt ist, der die Schaltspannungen (Us1, Us2) für den Umschalter (11), die Farbträgerfalle (3) und das Dämpfungsglied (10) erzeugt.

7. Gerät nach Anspruch 1, **dadurch gekennzeichnet**, daß der ermittelte Zustand in dem Prozessor (1) gespeichert wird.

## Claims

1. A television apparatus for selectively processing a colour video signal or a signal separated into video and colour, with a first input (20) for the colour video signal or the video signal, a second input (15) for the separated chrominance carrier (F), a colour decoder (8), and a change-over switch (11) which in its rest position (a) connects the input (d) of the colour decoder (8) via a chrominance carrier filter (9) to the first input (20) and in a second position (b) connects the said input (d) to the second input (15), where a switching voltage (Us1), which is generated in the colour decoder (8) and indicates the presence of the chrominance carrier (F), brings the change-over switch (11) into the rest position (a) when the chrominance carrier (F) is present and brings said change-over switch (11) into the second position (b) when the chrominance carrier (F) is absent, characterised in that when, in the second position (b), the switching voltage indicates that a chrominance carrier (F) is not present, the switching voltage (Us1) returns the change-over switch (11) to the rest position (a).

2. An apparatus as claimed in Claim 1, characterised in that the switching voltage in the colour decoder (8) is derived from the circuit for automatic blockage of the colour channel (colour killer).

3. An apparatus as claimed in Claim 1, characterised in that the first input (20) is connected via a chrominance carrier trap (3) to the video processor (6).

4. An apparatus as claimed in Claim 3, characterised in that when the change-over switch (11) is set in the second position (b), the chrominance carrier trap (3) is rendered inoperative.

5. An apparatus as claimed in Claim 1, characterised in that between the output (c) of the change-over switch (11) and the input (d) of the colour decoder (8) is arranged an attenuator (10), the attenuation of which is switched over during the test process to a value increased by approximately 10 dB.

6. An apparatus as claimed in Claim 4 and 5, characterised in that the voltage (U1, U2) generated by the colour decoder (8) is applied to a microprocessor (1) which generates the switching voltages (Us1, Us2) for the change-over switch (11), the chrominance carrier trap (3) and the attenuator (10).

7. An apparatus as claimed in Claim 1 characterised in that the determined state is stored in the processor (1).

## Revendications

1. Téléviseur destiné au traitement au choix d'un signal composite ou de signaux de synchronisation et luminance et de chrominance séparés, avec une première entrée (20) pour le signal composite ou le signal de synchronisation et luminance, une deuxième entrée (15) pour la sous-porteuse chrominance séparée d'un décodeur de chrominance (8) et un inverseur (11), lequel relie, dans sa position repos (a), l'entrée (d) du décodeur de chrominance (8) au travers d'un filtre de sous-porteuse chrominance (9) à la première entrée (20) et, dans sa position travail (b), à la deuxième entrée (15); une tension de commutation (Us1), générée dans le décodeur de chrominance (8) et indiquant la présence de la sous-porteuse chrominance, commutant alors l'inverseur (11) en position de repos (a) en cas de présence de sous-porteuse chrominance, et en position travail (b) en cas d'absence de sous-porteuse chrominance; lequel téléviseur étant caractérisé par le fait que si la tension de commutation indique, en position travail (b), l'absence d'une sous-porteuse chrominance, la tension de commutation (Us1) ramène l'inverseur (11) en position de repos (a).

2. Appareil conforme à la revendication 1, caractérisé par le fait que la tension de commutation dans le décodeur de chrominance (8) est dérivée du circuit de blocage automatique du canal couleur (color killer).

3. Appareil conforme à la revendication 1, caractérisé par le fait que la première entrée (20) est reliée au processeur vidéo (6) au travers d'un suppresseur de sous-porteuse chrominance (3).

4. Appareil conforme à la revendication 3, caractérisé par le fait que dans le cas d'un positionnement de l'inverseur (11) en position travail (b), le suppresseur de sous-porteuse chrominance (3) est désactivé.

5. Appareil conforme à la revendication 1, caractérisé par le fait qu'entre la sortie (c) de l'inverseur (11) et l'entrée (d) du décodeur de chrominance (8), il y a un atténuateur (10) dont l'atténuation est commutée sur une valeur supérieure d'environ 10 dB pendant la procédure de test.

6. Appareil conforme aux revendications 4 et 5, caractérisé par le fait que la tension de commutation (U1, U2) générée par le décodeur de chrominance (8) est appliquée sur un microprocesseur (1), lequel génère les tensions de commutation (Us1, Us2) pour l'inverseur (11), le suppresseur de sous-porteuse chrominance (3) et l'atténuateur (10).

7. Appareil conforme à la revendication 1, caractérisé par le fait que l'état déterminé est mémorisé dans le microprocesseur (1).
